# EUROPEAN PATENT APPLICATION

(11) **EP 1 241 848 A1**
(43) Date of publication of application: **18.09.2002**
(21) Application number: 01106640.4
(22) Date of filing: 16.03.2001
(51) Int. Cl.: H04L 29/06

(54) **Internet broadcast production system**

(71) Applicant: Kamera Holding AB, 111 36 Stockholm (SE)
(72) Inventor: Ekholm, Mats, 13954 Värmdö (SE)
(74) Representative: Platt, Timothy Nathaniel

(57) **Abstract**

A system for the production of Internet audiovideo broadcasts delivers, from a server (1) containing digital source files of proprietary audiovideo clips, to various Internet broadcast composer stations (3a-c), only the XML files associated with said proprietary clips and not the source files themselves. A computer program at the composer station provides for editing the XML files and time line coordination with voice-over files, caption or subtitle files and /or other audiovideo files.

## Description

The present invention relates to a system for production of an audio/video Internet broadcast in accordance with the preamble to the present Claim 1. The invention also relates to a computer program for use in a computer station.

Streaming technology has been the solution to the problem of disseminating audio/video material on the Internet without time-consuming downloading into the web site visitor's computer and without relinquishing proprietary control of the audio/video files themselves. QuickTime, Windows Media and Real provide systems and software for streaming audio/video sequences from a proprietary server to a web site visitor's computer. The web site administrator could simply insert a link to the proprietary server in his web site. When the web site visitor clicks on the link, the proprietary server will stream the audio/video sequence via QuickTime, Windows Media or Real to the web site visitor's computer for viewing and/or listening. The source file, i.e. the digitalized audio/video files, never actually leave the proprietary server, only a streamed unicast therefrom, thus preserving control of the proprietary material in the hands of the owner. He can thus prevent unauthorized copying, logo deletions, morphing and redistribution of the material.

These known systems however do not permit web site administrators and Internet broadcast composers to do permissible editing or augmentation of the audio/video sequence, i.e. shortening the length, adding a voice-over in the appropriate language, adding captions or subtitles etc. Such editing and adaptation of the proprietary material to create a custom audio/video broadcast for specific web sites has up to now required direct access to the files on the proprietary server and has therefore been done only by specialized internet companies and programmers entrusted to handle the proprietary files. This has also required facility in handling SMIL or ASX code.

A system of the type described by way of introduction, which has the characterizing features of Claim 1 removes these disadvantages. It makes it possible for a multitude of individual web site administrators/composers to produce their own audio/video broadcasts using in their broadcasts selected portions of proprietary audio/video sequences without the proprietor ever having to relinquish control of the source files to the web site administrators.

A computer program in accordance with Claim 5, for use in such a system, makes it possible for individual web site administrators/composers, at their own computer stations to create their own TV broadcasts or webcasts, combining proprietary clips and their own non-proprietary material such as voice-over files, images, captions and animation, with the aid of clip lists, recording equipment and several time-lines.

According to a further development of the invention, the proprietary audio and/or video files available are represented as rows of symbols or thumbnail images which can be dragged and dropped at selected positions on the appropriate timeline during composition of the Internet broadcast.

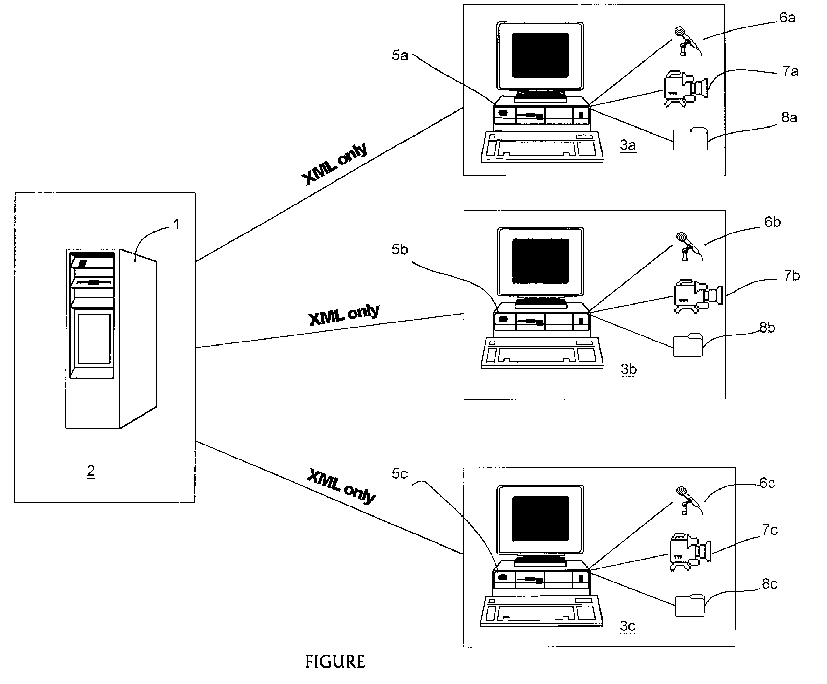

The invention will now be described in more detail with reference to the accompanying figure which illustrates schematically the architecture of the system according to the invention.

The figure shows a server 1 in a restricted access database unit 2. This server 1 contains libraries of proprietary audiovideo files. The content owner does not wish to transfer the actual source files themselves to various web site creators and administrators working at their individual computer stations 3a-c, which are telelinked to the proprietary server 1. Included in each computer station 3a-c are a standard computer 5a-c, microphone means 6a-c for voice-overs, video-recording means 7a-c for recording ones own audiovideo material as well as ones own files 8a-c of various formats, for example images, audio, captions, slide shows, animation, or other videos.

After selecting a format for the Internet broadcast to be composed, the creator/administrator, is presented by the computer program according to the invention with a list or lists of available video clips. The composer is able, by virtue of the invention, to review various rows of selections of audio/video clips which are available for inclusion in the Internet broadcast which he is composing. The selections are presented to the broadcast composer as rows of thumbnail images and titles, which he can click on to view. A portion of the clip or the entire clip is then stream-previewed, using common streaming technology, by the broadcast composer without leaving anything stored after it has been viewed.

In the same window, there are typically displayed three parallel time lines or representing tracks, one for video, one for audio and a third one labeled "events". The "events" track typically includes captions or subtitles, graphical events such as synchronized slides, and URL events controlling the browser displaying the broadcast. If the composer wishes to include in his Internet broadcast a portion of or a complete video clip from the row of available clips, he can click on the appropriate box or thumbnail image, or drag-and-drop it on the video time line. The length of the box corresponds to the duration of the video clip, which can be shortened by the composer.

Once again it is pointed out that for the proprietary clips stored in the server 1, the actual digital source files are never transferred to the computer station. It is sufficient that the Extensible Mark-up Language [XML] files associated with the clips be transferred. These meta-language files can be amended using the computer program according to the invention and are sufficient to combine it with the other desired components of the Internet broadcast as will be described as follows. On the video time line, the composer may place video sequences which he records himself using the video camera 7a-c. Animation sequences may also be placed on the video time line.

The audio track runs synchronously with the video track (and with the events track). On it there can be placed voice-over audio clips, which can be recorded using the microphone 6a-c, or music clips or pre-recorded audio clips. The duration of the clip is also in this case indicated by the length, on the audio time line, of the box representing the audio clip.

Finally, there is the "Event" track which runs synchronously with the other two tracks, and is represented by a third time line in parallel with the previous two. On it there can be placed texts such as captions or subtitles, graphics such as synchronized slides and URL events controlling the browser displaying the broadcast.

Different types of clips are indicated by coloring the boxes differently.

The three parallel time lines displayed adjust their time scale automatically as the Internet broadcast is composed and becomes longer in duration; i.e. they do not show a short duration composition as being bunched up to the left and the entire broadcast is always visible on time lines regardless of its duration.

When the composer has reviewed and changed his composition to his complete satisfaction, the composition is properly encoded, embedded in the composer's web site and uploaded to the appropriate server for broadcasting via the Real, Windows Media and/or QuickTime systems. It is also possible to place the broadcast for viewing only on an internal network or intranet. This encoding is taken care of by the computer program.

After uploading it is now possible for any visitor to the web site where the Internet broadcast is embedded to click on the appropriate button and have the Internet broadcast stream to his computer. The Internet broadcast is streamed to the web site visitor's computer via a Real, Windows Media or QuickTime server (visitor's preference) and the proprietary server unit 2 containing the proprietary digital source files. During this entire composition and broadcast process, these proprietary source files have never been outloaded to any other unit.

## Claims

1. System for production of an audio/video Internet broadcast, incorporating files of different formats, said system comprising:
(a) a restricted access database unit containing proprietary digital audio and/or video files,
(b) a computer station for production of Internet audio/video broadcasts, said station being telelinked to said database unit, **characterized by**
said database unit being programmed to prevent transfer of all or portions of its proprietary digital audio and/or video files to said computer station, but to permit transfer to said computer station of amendable Extensible Mark-up Language [XML] files associated with and governing streaming of said proprietary digital files.

2. System in accordance with Claim 1, **characterized in that** said Extensible Mark-up Language [XML] files associated with and governing streaming of said proprietary digital files are amendable at said computer station and are chronologically co-ordinatable at said computer station with non-proprietary digital files.

3. System in accordance with Claim 2, **characterized in that** said computer station is provided with recording means for producing said non-proprietary digital files.

4. System according to one of the preceding claims, **characterized by** a plurality of computer stations tele-linked to said database unit via the Internet.

5. Computer program, storable into a memory of a computer system, for composing Internet audio/video broadcasts at a computer station as defined in Claim 1, **characterized by**:
(a) code means for editing, at said computer station, said Extensible Mark-up Language [XML] files associated with and governing streaming of said proprietary digital files.
(b) code means for generating and displaying a visual chronological representation of a plurality of parallel lines representing synchronously running timelines for digitalized files in different formats, such as audio, video or text files,
(c) code means for orchestration on said timelines, at said computer station, of sequences of said proprietary files, together with non-proprietary and/or administrator produced files, such as audio, video or text files.

6. Computer program according to Claim 5, **characterized by** code means for displaying series of symbols or thumbnail images of proprietary digital files available for composing an Internet audio/video broadcast.

7. Computer program according to Claim 6, **characterized** code means whereby a selected digital file symbol or thumbnail image from said series can be dragged-and-dropped to a chosen position on a timeline.
